# EUROPEAN PATENT APPLICATION

(11) **EP 0 823 277 A2**
(43) Date of publication of application: **11.02.1998**
(21) Application number: 97111902.9
(22) Date of filing: 12.07.1997
(51) Int. Cl.: B01D 50/00, F24C 15/20

(54) **Method and apparatus for the purification of fluids**

(30) Priority: 05.08.1996 IT PN960048
(71) Applicant: Electrolux Zanussi Grandi Impianti S.p.A., 33170 Pordenone (IT)
(72) Inventor: Marchiori, Adriano, 30030 Robegano di Salzano, Venezia (IT); Innocente, Giuseppe, 31044 Montebelluna, Treviso (IT); Mastel, Marco, 32033 Lamon, Belluno (IT)
(74) Representative: Giugni, Valter

(57) **Abstract**

Method and apparatus for the purification of fluids containing contaminants and pollutants, wherein solid particles are separated centrifugally from the fluid being treated in a wet centrifuge (11), while deodorization of the same fluid occurs through injection of chlorine dioxide in a countercurrent flow with respect to the fluid by means of nozzles (33) arranged in a mixing chamber (26). In a preferred manner, the apparatus is made to comprise two modules (10, 21) that may be connected with each other in a number of different configurations.

## Description

The present inventionrefers to a method and an apparatus for the purification of fluids containing contaminants or pollutants such as gases, vapours and fumes that are produced in any type of processes, including food cooking and preparation operations.

A number of methods and apparatuses for eliminating emissions that may prove noxious to the environment or, anyway, cause a pollution of the same environment are known in the art. Among the most widely used solutions for the purification of gases, vapours and fumes, the one based on the separation of pollutants in a dry or wet centrifuge may be cited. Examples of such a solution are described in such prior-art documents as DE-U-89 05 182, DE-A-31 22 026, DE-A-33 15 477 and FR-A-2 071 197.

A more recent solution, disclosed in EP-A-0 677 317, describes a method and an apparatus in which the polluted gas is let into a centrifuge whose wall is provided with apertures having a cross-sectional profile in the form of a Venturi tube. The centrifuge is associated to a cyclone, or centrifugal separator, while water spray nozzles are provided both inside and outside the centrifuge. As a result, the solid polluting particles contained in the gas are caused to settle, centrifuged and discharged due to the combined action of the humidification, centrifugation and expansion process which the gas is caused to undergo.

All of these above mentioned prior-art solutions are effective in purifying such fluids as gases, vapours and fumes from most pollutants and contaminants. However, they are rather complicated from a construction point of view and, above all, they are not effective in ensuring a complete removal of odours. Such a drawback is particularly felt in food cooking or food preparation facilities and installations which generally issue strongly odorized and quite often ill-smelling fumes.

It therefore is a main purpose of the present invention to provide a method and an apparatus for the purification of gases, vapours and fumes, in particular those issuing from food-processing installations, which are capable of enabling not only solid polluting particles to be effectively separated, but also said fluids to be completely deodorized.

According to the present invention, such an aim is reached in a method that provides for the polluting particles to be eliminated by submitting said fluids to a wet centrifugation, while however doing away with the subsequent operation of separation by means of a cyclone, said operation being actually replaced with a deodorization process by means of oxidation with substances that are then recovered before said fluis are exhausted into the atmosphere.

For reasons of greater installation convenience and flexibility, the apparatus for carrying out the method according to the invention is subdivided into two modules that are functionally connected to each other.

The characteristics of the present invention are substantially as recited in the appended claims.

Advantages and features of the invention will anyway be more readily understood from the description which is given below by way of non-limiting example with reference to the accompanying drawings, in which:
- Figure 1 is a schematical plan view of the module for the separation of polluting particles for an apparatus for carrying out the method according to the present invention;
- Figure 2 is a schematical vertical-section view of the module of Figure 1 along the II-II line;
- Figure 3 is a schematical plan view of the module for the deodorization of the fluids for an apparatus for carrying out the method according to the present invention;
- Figure 4 is a schematical vertical-section view of the module of Figure 1 along the IV-IV line;
- Figure 5 is a schematical plan view of the modules of Figures 1 and 3 as assembled into a first configuration of apparatus according to the present invention; and

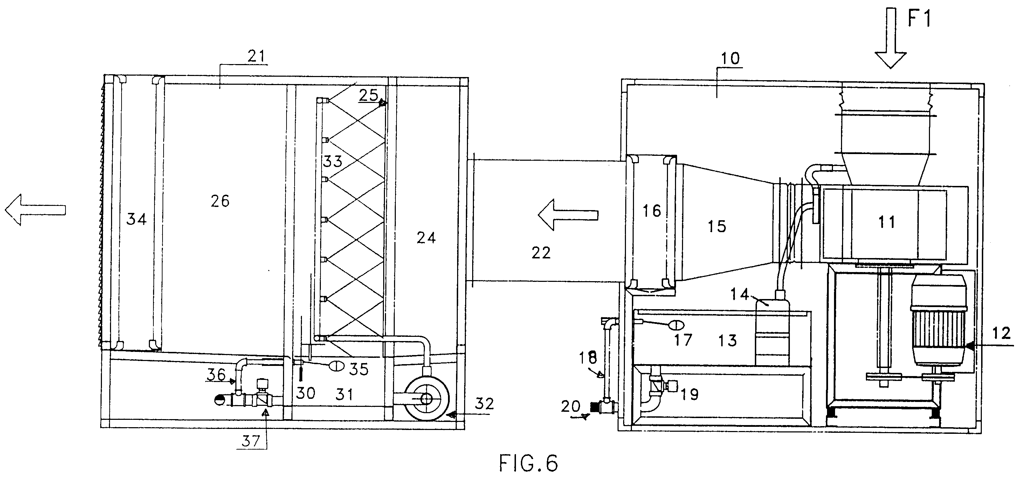

- Figure 6 is a schematical vertical-section view of the modules of Figures 2 and 4 as assembled into a second configuration of apparatus according to the present invention.

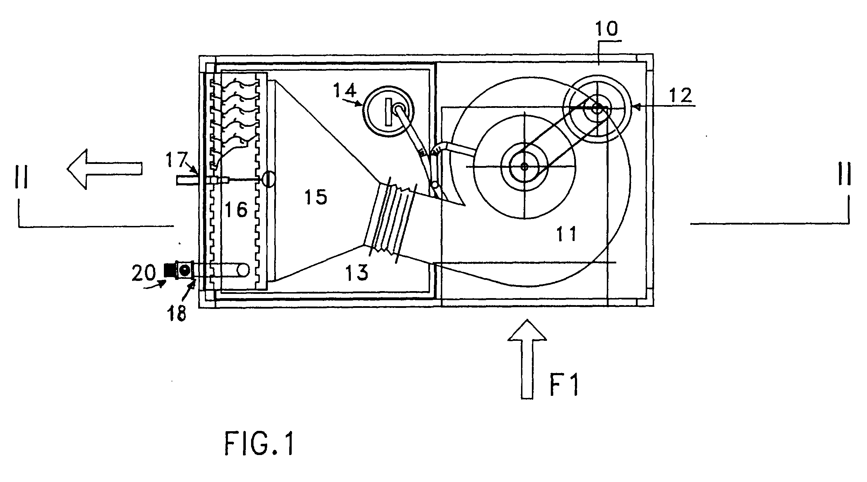

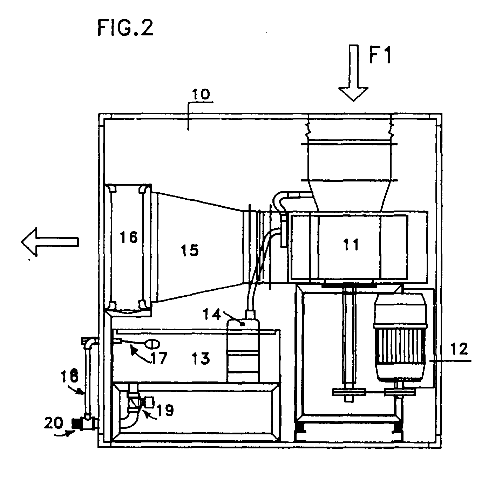

Referring to Figures 1 and 2, it can be noticed how the fluid to be purified is sucked into the module 10 for the separation of the solid polluting particles in the direction indicated by the arrow F1 by means of a centrifuge 11 of a generally know type (for instance such as the one described in the afore cited patent EP-A-0 677 317), driven by a motor 12 through a transmission belt.

IN said centrifufe 11, the fluid to be purified is mixed with water that is taken in from a reservoir 13, which arranged on a side thereof, by means of a pump 14. The fluid to be purified, thus mixed with water, is delivered, via an air-tight conduit 15 that varies its cross-section by gradually expanding in the direction of flow of the fluid, to a drops eliminator 16 installed above the reservoir 13. Such a variation in the cross-section of the conduit 15 enables a deceleration in the flow of the fluid to be obtained, so as to increase the effectiveness of the separation process. The polluting particles, transported by the water, fall then by gravity into the reservoir 13 located therebelow.

Figures 1 and 2 further show that the reservoir 13 is provided with a ball-cock 17 for controlling the level of the water, as well as a spillway 18 for clearing the polluting particles floating on the surface of the water. The reservoir 13 is drained (either manually or automatically in a timed manner) through an electromagnetic valve 19 and the conduit 20.

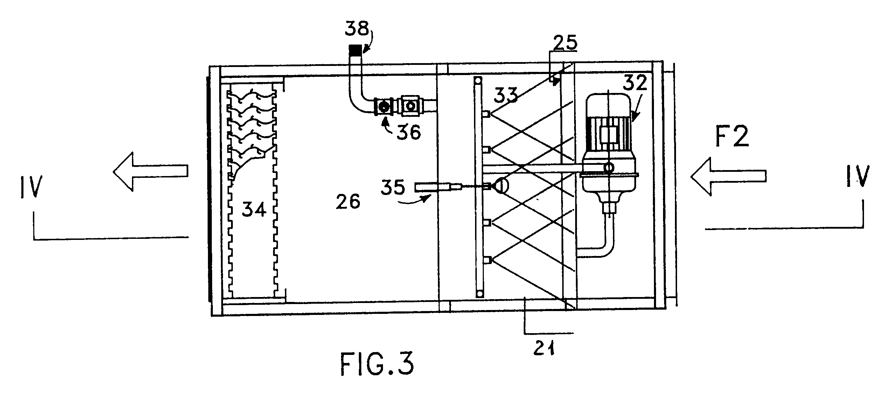

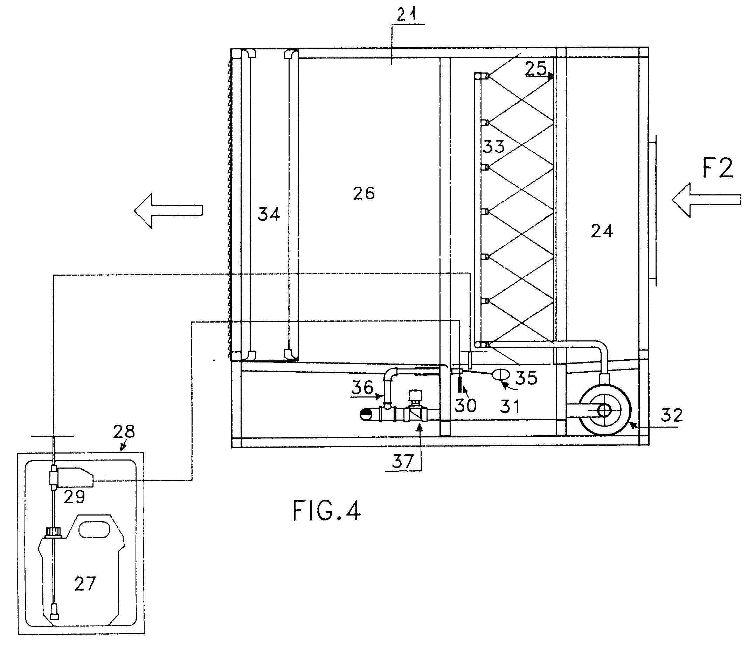

At the outlet from the drops eliminator 16, the purified fluid is let into the deodorization module 21, which is illustrated in Figures 3 and 4. Referring to these Figures, it can be noticed that the fluid is let, in the direction indicated by the arrow F2, into an expansion chamber 24 which is so sized as to slow down the flow velocity thereof. At the outlet from said expansion chamber 24 there is provided a perforated sheet-metal plate 25 whose perforations have such a diameter and are so arranged as to ensure as uniform a fluid flow as possible at the inlet of the subsequent mixing chamber 26.

Inside said mixing chamber 26, the fluid, which by this time is already fully freed from the solid polluting particles it contained, is mixed with an oxidizing and disinfecting substance having a high deodorizing power.

This deodorizing substance is preferably a solution of chlorine dioxide (ClO₂) stabilized at a concentration equal to 10,000 ppm, ie. a substance that is usually employed in drinking water purifying processes and installations.

The solution is contained in a reservoir 27 located in the interior of a control panel 28 which, for reasons of greater convenience, is installed in the working area of the user of the apparatus. The solution is taken from said reservoir 27 by means of a metering pump 29 located again in the interior of the control panel 28. The pump 29 is controlled by a probe 30 which, arranged inside the reservoir 31 located below the mixing chamber 26, is adapted to measure and detect the concentration of chlorine dioxide.

A pump 32 withdraws the ClO₂ solution from the reservoir 31 and delivers it to the spray nozzles 33. In the process, the solution meets with the countercurrent flow of fluid to be deodorized, so that it is able to act by developing an oxidizing reaction with the particles of said fluid.

The fluid, which is now fully purified and deodorized, is finally caused to flow through a drops eliminator 34, where the fluid is separated from the water-mixed deodorizing substance, which then falls by gravity into the reservoir 31 where it is collected.

Figures 3 and 4 show that the reservoir 31 is provided with a ball-cock 35 for controlling the level of the water, as well as a spillway 36 to both eliminate excess water and ensure safety conditions. The reservoir 31 is drained (either manually or automatically under timer control) through the electromagnetic valve 37 and the conduit 38.

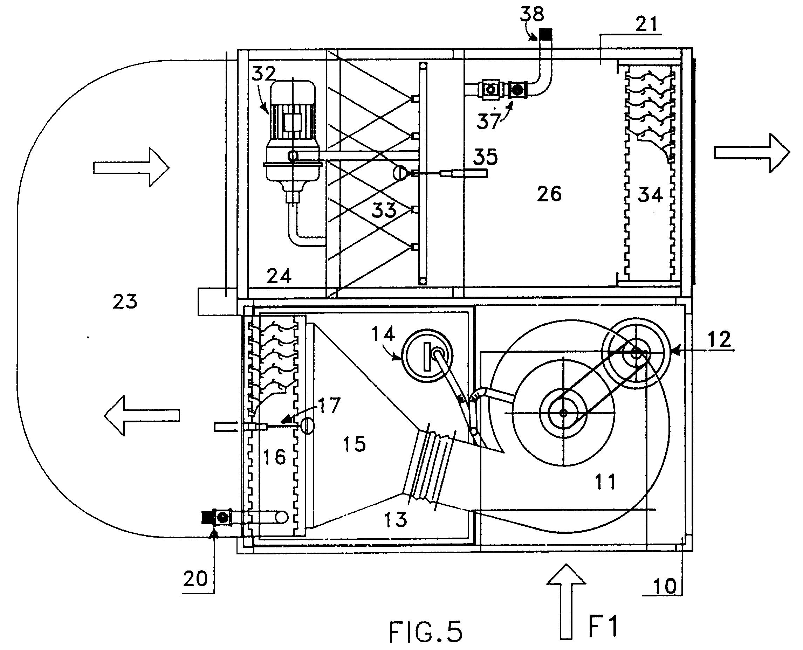

Figure 5 schematically illustrates, in a plan view, a first configuration of the connection of the purifying module 10 with the deodorizing module 21. Such a connection is established in a continuous manner via a rectilinear conduit 22, in the direction shown by the arrow.

Figure 5 schematically illustrates, in a vertical-section view, a second configuration of the connection of the purifying module 10 with the deodorizing module 21. Such a connection is established via a rectilinear conduit 23 curved by a 180° angle.

Further variants and modifications may be made to the above described embodiments of the present invention without departing from the scope thereof as defined in the appended claims.

## Claims

1. Method for the purification of fluids containing polluting substances, such as gases, vapours and fumes produced by industrial processes and installations, including food processing installations, comprising a first phase in which said fluids are centrifuged to clear them from the solid particles contained therein, **characterized in that**, after being centrifuged, said fluids are caused to undergo a second phase in which they are mixed with an oxidizing substance capable of fully deodorizing said fluids before they are exhausted into the atmosphere.

2. Method according to claim 1, **characterized in that** the mixing phase includes delivering a solution of stabilized chlorine dioxide (ClO₂) against the countercurrent flow of said fluids.

3. Method according to claim 2, **characterized in that** the stabilized chlorine dioxide in the solution is in a concentration of approx. 10,000 ppm.

4. Method according to any of the preceding claims, **characterized in that** at the end of the purification and deodorization treatment, but before exhausting them into the atmosphere, the fluids are caused to undergo a phase in which they are separated from said oxidizing solution.

5. Apparatus for the purification of fluids containing polluting substances, such as gases, vapours and fumes produced by industrial processes and installations, including food processing installations, comprising fluid centrifuging means (11) for the removal of solid particles contained in said fluids, **characterized in that**, downstream of said centrifuging means (11), there is arranged a mixing chamber (26) in which a plurality of nozzles (33) are provided to spray an oxidizing substance against the countercurrent flow of the fluid being treated, so as to deodorize it.

6. Apparatus according to claim 5, **characterized in that** upstream of the mixing chamber (26) there is provided an expansion chamber (24) and, subsequently thereto, a fluid-thread straightener (25) to ensure as uniform a flow of the fluid as possible.

7. Apparatus according to claim 5, **characterized in that** downstream of the mixing chamber (26) there is provided a drops eliminator (34) to prevent the oxidizing substance from being exhausted with the fluid.
